# FASCICULE DE BREVET EUROPEEN

(11) **EP 2 491 365 B1**
(45) Date de publication et mention de la délivrance du brevet: **04.12.2013**
(21) Numéro de dépôt: 10766057.3
(22) Date de dépôt: 18.10.2010
(51) Int. Cl.: F02C 9/26, F02C 9/28, F02C 9/46, F01D 19/00, G01M 15/14

(54) **TEST DE NON-EXTINCTION POUR CHAMBRE DE COMBUSTION DE TURBOMACHINE**
NICHT-AUSLÖSCHUNGSTEST FÜR DIE BRENNKAMMER EINES TURBINENMOTORS
NON-FLAME-OUT TEST FOR THE COMBUSTION CHAMBER OF A TURBINE ENGINE

(30) Priorité: 19.10.2009 FR 0957303
(43) Date de publication de la demande: 29.08.2012
(73) Titulaire: Turbomeca, 64510 Bordes (FR)
(72) Inventeur: COURTIE, Philippe, Roger, F-64110 Rontignon (FR); ETCHEPARE, Philippe, F-64000 Pau (FR); VERDIER, Hubert, Pascal, F-64800 Nay (FR)
(74) Mandataire: Gevers France
(86) Numéro de dépôt international: PCT/EP2010/065664
(87) Numéro de publication internationale: WO 2011/048065

(56) Documents cités:
- US-A- 5 596 871
- US-A1- 2007 113 563
- LI ET AL: "Active control of lean blowout in a swirl-stabilized combustor using a tunable diode laser" PROCEEDINGS OF THE COMBUSTION INSTITUTE, ELSEVIER, NL LNKD- DOI:10.1016/J.PROCI.2006.07.006, vol. 31, no. 2, 28 décembre 2006 (2006-12-28), pages 3215-3223, XP005818004 ISSN: 1540-7489
- ANONYMOUS: "Turbine engine power-loss and instability in extreme conditions of rain and hail" FEDERAL AVIATION ADMINISTRATION ADVISORY CIRCULAR 33.78-1, 2 août 2000 (2000-08-02) , XP002579987
- NADER RIZK: "Overview of the relationship between fuel properties and engine performance" ICAO WORKSHOP, AVIATION & ALTERNATIVE FLUELS 11 février 2009 (2009-02-11), pages 1-24, XP002579988 Extrait de l'Internet: URL:http://www.icao.int/WAAF2009/Presentat ions/26_Rizk.pdf [extrait le 2010-04-27]

## Description

Le domaine de la présente invention est celui de la thermodynamique appliquée aux turbomachines et plus particulièrement celui du fonctionnement des turbomachines aéronautiques.

Les turbomachines sont constituées classiquement d'un ou plusieurs compresseurs qui compriment de l'air aspiré dans une entrée d'air, d'une chambre de combustion où du carburant mélangé à l'air est brûlé, d'une ou plusieurs turbines qui prélèvent une partie de la puissance générée par la combustion pour entraîner le ou les compresseurs et d'une tuyère de sortie par laquelle sont éjectés les gaz produits.

Les turbomachines aéronautiques sont utilisées dans un grand domaine de vol, dans lequel leur fonctionnement doit être garanti pour assurer la sécurité de l'équipage et celle des éventuels passagers. En particulier il est impératif d'éviter que le turboréacteur d'un avion ou le turbomoteur d'un hélicoptère ne s'éteigne au cours d'un manoeuvre opérée par le pilote. Une telle extinction de la flamme dans la chambre de combustion risque de se produire, par exemple, lorsque le pilote effectue une manoeuvre de réduction rapide de la poussée ou de la puissance délivrée. Ce type de manoeuvre peut être effectuée en urgence lorsque le pilote, sur un avion veut ralentir brutalement sa vitesse ou, sur un hélicoptère cherche à décélérer brutalement pour, par exemple, éviter un obstacle qu'il découvre soudainement devant lui (manoeuvre dite "quick stop" ou décélération rapide).

En fonctionnement normal la régulation du moteur est prévue pour piloter le débit de carburant qui est injecté dans la chambre de combustion et éviter une telle extinction. Mais en cas de défaillance de cette régulation ou d'évolutions dans les caractéristiques physiques des pièces du moteur, une telle extinction n'est pas exclue. Un tel défaut peut survenir lors du vieillissement du moteur, qui génère des évolutions dans les jeux ou dans la taille des orifices d'admission d'air ou dans le système d'injection et de régulation du carburant. Ceci se traduit alors par une quantité d'air admise dans la chambre qui est supérieure à celle attendue ou par une quantité de carburant injectée dans la chambre qui est inférieure à celle attendue et par conséquent par une diminution de la richesse du mélange.

Lors d'une manoeuvre de décélération rapide, la réduction brutale du débit de carburant qui est injecté dans la chambre de combustion se traduit par une modification instantanée de la richesse du mélange. En effet la réduction du débit carburant est quasi immédiate quand le boisseau de commande du débit carburant est commandé vers la fermeture alors que la réduction du débit d'air suit la décroissance de la vitesse de rotation de l'arbre moteur, dont l'évolution est limitée par l'inertie du rotor et qui n'est donc pas instantanée. La richesse évolue brutalement de sa valeur nominale vers une valeur appauvrie, qui n'a vocation à redevenir nominale que lorsque le régime moteur se sera stabilisé à sa nouvelle valeur. Or la stabilité d'une flamme dans une chambre de combustion n'est garantie que si la richesse du mélange reste comprise entre deux valeurs extrêmes, une valeur dite d'extinction riche et une valeur dite d'extinction pauvre.

Dans le cas d'une manoeuvre d'urgence de type quick stop, si le moteur est défaillant pour une des causes évoquées précédemment, il est alors possible que la richesse tombe en dessous de la valeur d'extinction pauvre et que le moteur s'éteigne. Pour vérifier l'aptitude d'un moteur à résister à ce phénomène d'extinction lors de ces manoeuvres d'urgence, seul un test au banc d'essai permet aujourd'hui d'effectuer le diagnostic correspondant. Il n'est de plus pratiqué que lors de la réception des moteurs neufs. Par la suite les moteurs ne sont plus contrôlés, sauf lors d'une révision générale. Si les caractéristiques du moteur évoluent, le risque d'une défaillance passe donc complètement inaperçu en utilisation normale car les réductions normales de régime n'étant pas aussi sévères que celle entraînée par une manoeuvre d'urgence ci-dessus, la richesse du mélange ne descend pas jusqu'à atteindre la limite d'extinction pauvre. Il est alors possible que le moteur s'éteigne si le pilote a à effectuer cette manoeuvre d'urgence, c'est à dire à un moment où il a particulièrement besoin de lui.

La présente invention a pour but de remédier à ces inconvénients en proposant une méthode, réalisable sur aéronef au sol, de contrôle du bon fonctionnement du moteur pour le cas où il serait nécessaire d'effectuer une manoeuvre de décélération rapide en vol. Cette méthode permet en outre d'évaluer si la chambre de combustion a subi d'éventuelles dégradations.

A cet effet, l'invention a pour objet un procédé de contrôle selon la revendication 1. Un test similair est décrit dans H. Li et al. "Active control of lean blow out in a surve-stabilized combustor using a tunable diode cases", Proc. Combustion Institute 31 (2007).

Le test consiste à observer une éventuelle extinction de la chambre de combustion lors de cette manoeuvre et d'en déduire si le moteur est apte à supporter une manoeuvre de décélération rapide en vol.

De façon préférentielle la décroissance est réalisée de façon automatique par le calculateur du moteur, sur actionnement par le pilote ou un mécanicien d'une commande dédiée, associée audit calculateur.

On s'assure ainsi que la décroissance réalisée suit parfaitement la décroissance nominale du test. On limite également la complexité de réalisation de l'essai pour les pilotes et/ou mécaniciens.

Avantageusement le régime moteur au départ du contrôle est modulé en fonction des conditions de température et de pression du lieu d'exécution dudit contrôle de bon fonctionnement.

De façon encore plus avantageuse le taux de décroissance du débit de carburant au cours du contrôle est modulé en fonction des conditions de température et de pression du lieu d'exécution dudit contrôle de bon fonctionnement.

Cela permet de prendre en compte les caractéristiques particulières du lieu où se déroule le test et donc de l'effectuer dans des conditions représentatives du fonctionnement de la chambre de combustion.

L'invention concerne également un procédé de détermination de la valeur limite de la décroissance du débit carburant selon la revendication 5 à partir de laquelle se produit l'extinction de la chambre de combustion d'une turbomachine aéronautique par la réalisation successive de plusieurs contrôles tels que décrits ci-dessus, les taux de décroissance appliqués étant à chaque fois en augmentation par rapport au contrôle précédent.

De façon préférentielle le débit carburant injecté dans la chambre de combustion est adapté en fonction de la limite d'extinction trouvée selon le procédé ci-dessus.

L'invention concerne enfin un calculateur de régulation du débit de carburant injecté dans une turbomachine aéronautique, dans lequel est implanté un module de réalisation d'un des procédés décrits ci-dessus et une turbomachine aéronautique comportant un tel calculateur.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence au dessin schématique annexé.

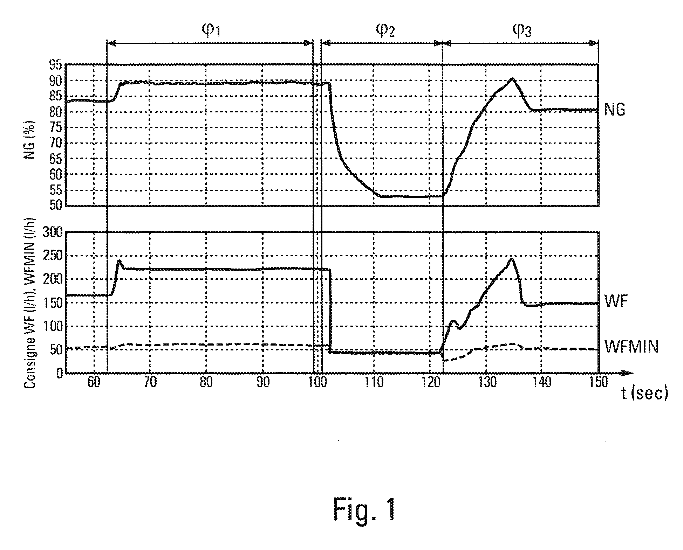

Sur la figure 1 sont représentées la vitesse du générateur de gaz (NG), la consigne de débit (WF) pilotée par le calculateur et la butée de débit mini imposée par le calculateur (WFMIN), au cours d'un test de non-extinction.

La consigne de débit est la valeur du débit demandée par le calculateur au système de régulation qui agit sur la position du doseur de carburant. La valeur de débit mini est une valeur plancher, définie dans le calculateur, qui fixe une butée inférieure à la consigne de débit transmise par le calculateur. L'extinction ou la non-extinction de la chambre de combustion dans le cas d'une réduction rapide du régime, est liée au bon positionnement de cette valeur mini.

L'évolution des paramètres sur la figure 1 est décomposé en trois phases, référencées φ1, φ2 et φ3. La phase 1 correspond à une phase de préparation du test, au cours de laquelle le pilote affiche un régime spécifié à l'avance (typiquement 90 % de la valeur au plein gaz) et attend que ce régime se stabilise. Cette stabilisation est surveillée par le calculateur qui n'autorise le lancement de la phase 2 que si elle est effective. La phase 2 correspond au déclenchement du test par le calculateur, en réponse à une demande du pilote ou du mécanicien et la phase 3 correspond au retour au fonctionnement normal, au ralenti, après le test. Le déclenchement de la phase 2 s'accompagne d'une réduction calibrée de la valeur de la consigne de débit mini WFMIN en dessous de sa valeur telle qu'elle est définie par le calculateur en utilisation normale.

Au cours de la phase 1, le régime étant stable à 90%, la consigne de débit transmise par le calculateur est constante une fois que le régime s'est stabilisé, et égale au débit nécessaire pour maintenir cette valeur du régime; la valeur de la consigne de débit mini, qui correspond à la décroissance maximale qu'autoriserait le calculateur en cas de réduction brutale du régime du moteur, est elle aussi stable et égale à sa valeur en fonctionnement normal.

Lorsque le calculateur déclenche le test, ceci se traduit par une réduction brutale de la consigne de débit et l'envoi de celle-ci sur la valeur de consigne de débit mini qui est programmée dans le calculateur pour le test et qui est, comme indiqué ci-dessus, volontairement positionnée à une valeur inférieure à celle qu'elle a en fonctionnement normal. Cette valeur réduite de la consigne de débit mini est précisément celle que l'on cherche à tester, c'est-à-dire celle pour laquelle on veut vérifier l'absence d'extinction du moteur lors d'une manoeuvre d'urgence. Le régime du moteur décroît rapidement, en lien avec l'inertie de ses pièces tournantes, et se stabilise, dans le cas représenté sur la figure 1 où il n'y a effectivement pas d'extinction, à une valeur donnée, inférieure à celle du ralenti.

La phase 3 correspond au retour aux conditions normales, avec l'arrêt du test qui est matérialisé par une augmentation de la consigne de débit, vers sa valeur correspondant au ralenti. L'augmentation de la consigne de débit entraîne une croissance du régime du moteur vers le ralenti où il se stabilise à nouveau. La valeur de la consigne de débit mini reste quant à elle constante, à des oscillations transitoires près.

Pour répondre au problème posé l'invention propose d'implanter dans le calculateur du moteur, qui commande à tout instant le débit de carburant injecté dans la chambre de combustion, un module dont l'activation déclenche une procédure spécifique de test de non extinction, à réaliser au sol, moteur tournant, par exemple au point fixe, c'est-à-dire lors du contrôle de bon fonctionnement du moteur effectué à chaque vol, avant le décollage.

Ce test consiste à effectuer une diminution programmée de la quantité de carburant injectée, de façon à simuler la décroissance du débit lors d'une manoeuvre d'urgence, telle qu'un quick stop, et à reproduire des conditions de richesse proches de celles qui existeraient lors de cette manoeuvre. La réduction de la quantité de carburant injectée s'effectue en modifiant brutalement la consigne de débit WF transmise par le calculateur au système de régulation qui pilote la position du doseur, et en donnant instantanément à cette consigne WF une valeur de consigne minimale prédéfinie WFMIN. Cette décroissance s'effectue jusqu'à une valeur WFMIN qui est inférieure à la consigne de débit mini mise en oeuvre en fonctionnement normal, de façon à simuler la richesse minimale par laquelle passerait la chambre de combustion du moteur lors d'une manoeuvre de type quick-stop. Cette valeur de consigne de débit mini utilisée pour le test, est définie par le bureau d'études lors de la conception du moteur, sur la base des calculs du fonctionnement de la chambre ou bien sur la base d'enregistrements effectués en vol sur un aéronef en essai. Elle est modulée en fonction des conditions dans lesquelles est effectué ce test, comme par exemple l'altitude de l'aérodrome où se situe l'aéronef, les conditions atmosphériques, etc. Cette modulation de la valeur donnée à la consigne de débit mini WFMIN à afficher au cours du test porte, entre autres, sur la valeur du régime moteur fixé au départ du test de non-extinction.

La procédure se déroule de la façon suivante : en fonction d'une périodicité prescrite par le manuel de vol ou le manuel de maintenance, le pilote lance la manoeuvre simulée de décélération rapide, par une action sur une commande spécifique associée au calculateur du moteur. Ce dernier lance alors la décroissance programmée par l'envoi d'une consigne de débit WF égale à la valeur de consigne de débit mini WFMIN prédéfinie pour le test, ce qui se traduit par le déplacement, dans le sens de la fermeture, du boisseau de commande du débit carburant, et le pilote vérifie s'il y a ou non extinction de la chambre de combustion. S'il n'y a pas extinction le moteur est considéré comme étant dans des conditions nominales et le vol suivant peut avoir lieu. Le pilote sait ainsi que le moteur est sain vis-à-vis du risque de décélération rapide et qu'il peut effectuer sans risque une telle manoeuvre d'urgence, si le besoin s'en faisait sentir en vol.

S'il y a extinction lors du test au sol, cela signifie que le moteur n'est pas dans ses conditions normales de fonctionnement et qu'il convient de prévoir une opération de maintenance avant de délivrer son autorisation de remise en vol. Une telle opération de maintenance, qui sera précisée dans le manuel d'utilisation du moteur, peut par exemple comporter une dépose du moteur et son envoi en atelier. La cause du mauvais fonctionnement sera recherchée tant au niveau d'un mauvais fonctionnement du système de régulation et d'injection du carburant qu'au niveau d'une dégradation des performances de la chambre, par exemple du fait de son vieillissement.

Des analyses complémentaires peuvent également être proposés dans le cadre de ce test de non-extinction : il est envisageable de faire une recherche de la limite d'extinction par plusieurs essais puis, en fonction de la valeur trouvée pour la consigne de débit de carburant minimum WFMIN garantissant la non-extinction, d'adapter les lois de fonctionnement dans le calculateur pour tenir compte des pertes de performances constatées. La décroissance maximum du débit carburant fixé par le calculateur pour une utilisation normale est alors limitée afin de garantir l'absence d'extinction ; en conséquence le moteur peut continuer à être utilisé sans risque et sans qu'il soit besoin de le déposer et d'installer un moteur sain sur l'aéronef.

## Revendications

1. Procédé de contrôle au sol de la fonction d'évitement d'extinction de la flamme d'un système de régulation du débit carburant injecté dans la chambre de combustion d'une turbomachine aéronautique, ledit système étant piloté par un calculateur lui transmettant une consigne (WF) de la valeur du débit à injecter, ladite valeur étant supérieure à une valeur plancher (WFMIN) prédéfinie par ledit calculateur pour éviter les risques d'extinction en cas de manoeuvre de réduction rapide de la consigne de débit, **caractérisé en ce qu'**il comporte la réalisation, sur la turbomachine en fonctionnement et à partir d'un régime déterminé, d'une réduction du débit de carburant selon une décroissance programmée pour atteindre une valeur de consigne de débit inférieure à la valeur plancher correspondant au fonctionnement au sol considéré, suivie de la vérification de la non-extinction de la chambre de combustion.

2. Procédé selon la revendication 1 dans lequel la décroissance est réalisée de façon automatique par le calculateur du moteur, sur actionnement par le pilote ou un mécanicien d'une commande dédiée, associée audit calculateur.

3. Procédé selon l'une des revendications 1 ou 2 dans lequel le régime moteur au départ du contrôle est modulé en fonction des conditions de température et de pression du lieu d'exécution dudit contrôle de bon fonctionnement.

4. Procédé selon l'une des revendications 1 à 3 dans lequel la décroissance du débit de carburant au cours du contrôle est modulée en fonction des conditions de température et de pression du lieu d'exécution dudit contrôle de bon fonctionnement.

5. Procédé de détermination de la valeur limite de la décroissance du débit carburant à partir de laquelle se produit l'extinction de la chambre de combustion d'une turbomachine aéronautique par la réalisation successive de plusieurs contrôles selon l'une des revendications 1 à 4, les décroissances appliquées étant à chaque fois en augmentation par rapport au contrôle précédent.

6. Procédé de régulation du débit carburant injecté dans la chambre de combustion d'une turbomachine aéronautique dans lequel le débit de carburant est adapté en fonction de la limite d'extinction trouvée selon le procédé de la revendication 5.

7. Calculateur de régulation du débit de carburant injecté dans une turbomachine aéronautique dans lequel est implanté un module de réalisation d'un procédé selon l'une des revendications précédentes.

8. Turbomachine aéronautique comportant un calculateur selon la revendication précédente.

## Patentansprüche

1. Verfahren zur Bodenkontrolle der Funktion zum Vermeiden des Brennschlusses der Flamme eines Systems zum Regulieren des Treibstoffdurchsatzes, der in die Brennkammer einer Luftfahrt-Turbomaschine eingespritzt wird, wobei das System von einem Rechner angesteuert wird, der ihm eine Einstellgröße (WF) für den Wert des einzuspritzenden Durchsatzes überträgt, wobei der Wert größer als ein Tiefstwert (WFMIN) ist, der von dem Rechner vordefiniert ist, um die Brennschlussrisiken bei einem schnellen Reduzierungsmanöver der Durchsatz-Einstellgröße zu vermeiden, **dadurch gekennzeichnet, dass** es das Ausführen an der Turbomaschine im Betrieb und ausgehend von einer bestimmten Drehzahl einer Reduzierung des Treibstoffdurchsatzes gemäß einer programmierten Verminderung umfasst, um einen Durchsatz-Einstellgrößenwert zu erreichen, der kleiner als der Tiefstwert ist, der dem betreffenden Bodenbetrieb entspricht, gefolgt von der Überprüfung des Nicht-Brennschlusses der Brennkammer.

2. Verfahren nach Anspruch 1, wobei die Verminderung durch den Rechner des Motors automatisch ausgeführt wird, wenn der Pilot oder ein Mechaniker ein spezielles Bedienelement betätigt, das mit dem Rechner verknüpft ist.

3. Verfahren nach einem der Ansprüche 1 oder 2, wobei die Motordrehzahl zu Beginn der Kontrolle in Abhängigkeit der Temperatur- und Druckverhältnisse des Ausführungsortes der Funktionskontrolle moduliert wird.

4. Verfahren nach einem der Ansprüche 1 bis 3, wobei die Verminderung des Treibstoffdurchsatzes der Kontrolle in Abhängigkeit von den Temperatur- und Druckverhältnissen des Ausführungsortes der Funktionskontrolle moduliert wird.

5. Verfahren zum Bestimmen des Grenzwertes der Verminderung des Treibstoffdurchsatzes, ab dem der Brennschluss der Brennkammer einer Luftfahrt-Turbomaschine erfolgt, durch das aufeinanderfolgende Ausführen mehrerer Kontrollen gemäß einem der Ansprüche 1 bis 4, wobei die angewendeten Verminderungen jeweils im Verhältnis zur vorhergehenden Kontrolle zunehmen.

6. Verfahren zum Regulieren des Treibstoffdurchsatzes, der in die Brennkammer einer Luftfahrt-Turbomaschine eingespritzt wird, wobei der Treibstoffdurchsatz in Abhängigkeit von der Brennschlussgrenze angepasst wird, die gemäß dem Verfahren nach Anspruch 5 gefunden wird.

7. Rechner zum Regulieren des Treibstoffdurchsatzes, der in eine Luftfahrt-Turbomaschine eingespritzt wird, in dem ein Modul zum Ausführen eines Verfahrens nach einem der vorhergehenden Ansprüche eingebaut ist.

8. Luftfahrt-Turbomaschine, umfassend einen Rechner gemäß dem vorhergehenden Anspruch.

## Claims

1. A method for testing, on the ground, the flame-out avoidance function of a system for regulating the fuel flow injected into the combustion chamber of an aeronautical turbine engine, said system being controlled by a computer transmitting to it a command (WF) of the value of the flow to be injected, said value being higher than a limit value (WFMIN) predefined by said computer in order to avoid the risk of flame-out in the case of a rapid reduction in the flow command maneuver, **characterized in that** it comprises the carrying out, on the turbine machine whilst it is operating and starting from a predetermined rotation speed, a reduction in the flow of fuel according to a programmed decrease towards a flow command value lower than the limit value corresponding to the operation on the ground in question, followed by an examination of the non-flame-out of the combustion chamber of said turbine engine.

2. The method as claimed in claim 1, wherein the decrease is carried out automatically by the engine's computer, when the pilot or a mechanic operates a dedicated control associated with said computer.

3. The method as claimed in one of claims 1 or 2, wherein the engine rotation speed at the start of the test is varied as a function of the temperature and pressure conditions of the place of execution of said proper functioning operation test.

4. The method as claimed in one of claims 1 to 3, wherein the decrease in the fuel flow during the test is varied as a function of the temperature and pressure conditions of the place of execution of said proper functioning operation test.

5. A method of determining the limit value of the decrease in the fuel flow after which flame-out of the combustion chamber of an aeronautical turbine engine occurs by successively carrying out several tests as claimed in one of claims 1 to 4, the decreases being greater each time with respect to the preceding test.

6. A method of regulating the fuel flow injected into the combustion chamber of an aeronautical turbine engine wherein the fuel flow is adjusted as a function of the flame-out limit found according to the method as claimed in claim 5.

7. A computer for regulating the fuel flow injected into an aeronautical turbine engine, wherein there is installed a module for carrying out a method as claimed in one of the preceding claims.

8. An aeronautical turbine engine comprising a computer as claimed in the preceding claim.
